# EUROPEAN PATENT SPECIFICATION

(11) **EP 2 504 940 B1**
(45) Date of publication and mention of the grant of the patent: **29.08.2018**
(21) Application number: 10801790.6
(22) Date of filing: 05.07.2010
(51) Int. Cl.: H04L 5/00, H04L 27/26

(54) **WIRELESS DATA COMMUNICATIONS**
DRAHTLOSE DATENKOMMUNIKATIONEN
COMMUNICATIONS DE DONNÉES SANS FIL

(30) Priority: 20.07.2009 AU 2009903399; 06.08.2009 US 231923 P
(43) Date of publication of application: 03.10.2012
(73) Proprietor: Commonwealth Scientific and Industrial Research Organisation, Campbell, Australian Capital Territory 2612 (AU)
(72) Inventor: HUANG, Xiaojing, North Ryde NSW 2113 (AU); MURRAY, Boyd, McGregor, North Epping NSW 2121 (AU); BUNTON, John, David, St Clair NSW 2759 (AU); GUO, Yingjie, Jay, Epping NSW 2121 (AU); DYADYUK, Valeriy, Cremorne NSW 2090 (AU)
(74) Representative: Beck, Simon Antony
(86) International application number: PCT/AU2010/000854
(87) International publication number: WO 2011/009157

(56) References cited:
- WO-A2-01/99293
- WO-A2-2006/127544
- US-A1- 2004 131 007
- US-A1- 2005 025 039
- US-A1- 2005 135 312
- US-A1- 2006 291 470
- US-A1- 2007 014 272
- US-A1- 2007 115 795
- US-A1- 2007 115 795
- US-A1- 2007 202 816
- US-A1- 2008 207 119
- US-B1- 6 937 665

## Description

### Technical field

The invention relates to data communications, and particularly to transmitting and receiving digital data information over a point-to-point wireless link.

### Background

High speed broadband networks have been growing rapidly in recent decades. With the advance of wireless communications technologies, broadband wireless access (BWA) networks such as WiMAX (Worldwide Interoperability for Microwave Access, for example in Loutti Nuoymi, WiMAX Technology for Broadband Wireless Access, John Wiley & Sons, Ltd., 2007) will be able to replace wired access networks to provide broadband services such as the Internet access and combined voice, video, and data transmission in a cost-effective manner. One application of BWA is fixed-point wireless backhauling, which can provide high data rate wireless link between the Internet backbone and the base station (BS) of another wireless access network and/or between the BS and a consumer premise equipment (CPE) such as a access point (AP) in a wireless local area network (WLAN). In countries with large geographical areas of low population density (e.g. United States, Canada and Australia), high data rate wireless backhauling links are extremely necessary to economically bring broadband services to remote areas.

Fixed-point wireless communications services, or simply fixed services, commonly use systems operating in the microwave frequency range between 1 to 86 GHz. For example, fixed WiMAX systems (based on the IEEE 802.16-2004 standard) are currently allocated the 2.3, 2.5, and 3.5 GHz frequency bands for their operations. The channel bandwidth in fixed WiMAX is equal to or less than 20 MHz. The maximum data rate can be as high as 75 Mbits/s. There are also other frequency bands dedicated for fixed services such as the 6, 6.7 and 8 GHz bands. The channel bandwidth is 29.65 MHz in the 6 and 8 GHz bands and 40 MHz in the 6.7 GHz band. Systems operating in these frequency bands can typically provide data rates of over 100 Mbits/s.

With the ever increasing demand for high speed wireless connectivity, multi-gigabit wireless links are necessary, especially for the wireless backhauling which connects the Internet backbone and the base station of a broadband network. However, currently available wireless technologies operating in the microwave frequency band can not offer more than Gigabits per second data rates. A solution to realise a multi-gigabit/s wireless link would be one which combines a number of lower data rate wireless systems operating in different radio frequency (RF) channels to achieve a higher data rate. For example, if all the RF channels in the 6, 6.7, and 8 GHz frequency bands were aggregated together, the total bandwidth would be about 794.4 MHz. If multi-level modulation such as 64-QAM were used to achieve a spectral efficiency of 6 bits/s/Hz, the total achievable data rate would be 4.766 Gbits/s. However, the direct combination of multiple low rate wireless systems has many drawbacks as described below.

First, the direct combination of low data rate systems can not make full use of the available bandwidth. According to the current RF channel assignment regulations enforced by government agencies administering the use of radio spectrum (e.g., the Australian Communications and Media Authority and the Federal Communications Commission in the United States), a microwave frequency band is divided into a number of narrowband RF channels and the channels are arranged in pairs separated by a fixed transmit/receive duplex spacing. Co-channel and adjacent channel protection ratios are defined to prevent interference among different channels. If data are transmitted independently in different RF channels, guard bands must be enforced to prevent emission into adjacent channels.

Second, to reduce the implementation cost, signals from multiple RF channels need to be combined together to form a multicarrier signal before power amplification. However, a multicarrier signal demonstrates high peak-to-average power ratio (PAPR), which significantly reduces the power efficiency of a wireless system since a transmit power backoff has to be enforced to reduce nonlinearity. In general, the higher the number of carriers used in the combined signal, the higher the PAPR will be.

Third, the direct combination of low data rate systems is also not cost efficient since separate baseband processing modules, analogue-to-digital and digital-to-analogue converters, and RF chains including mixers, bandpass filters and power amplifiers are required for individual RF channels.

US 2007/0115795 discloses transmitting data using single-carrier frequency division multiple access multiplexing. In SC-FDMA a plurality of sub-band are combined into a group and the same symbol is modulated onto all of them.

### Summary

There is further provided a wireless data communications method as claimed in claim 1.

There is yet further provided a transceiver as claimed in claim 11.

Preferably, the plurality of aggregated sub-bands is varied in number in a range extending from between one of and all of said assigned channels as data rate increases. Data symbols can be modulated in all of said plurality of aggregated sub-bands.

### Description of the drawings

In the drawings:
Figs. IA and IB are block flow diagrams of methods embodying the invention.
Fig. 2 is a schematic block diagram of a point-to-point wireless link.
Fig. 3 is a schematic block diagram of a transceiver.
Fig. 4 is a schematic block diagram of a forward path transmitter.
Fig. 5 is a schematic block diagram of a return path receiver,
Figs. 6A, 6B and 6C show example sub-band channels and aggregation schemes.
Fig. 7 shows a first example of a modulation scheme embodying the invention.
Fig. 8 is a schematic block diagram of a transmitter.
Fig. 9 is a schematic block diagram of a receiver corresponding to the transmitter of Fig. 8.
Fig. 10 shows a second example of a modulation scheme embodying the invention.
Fig. 11 is a schematic block diagram of another transmitter.
Fig. 12 is a schematic block diagram of a receiver corresponding to the transmitter of Fig. 11.
Fig. 13 is a further example of a modulation scheme embodying the invention.

### Detailed description

Where reference is made in any one or more of the accompanying diagrams to steps and/or features which have the same reference numerals, those steps and/or features have for the purpose of this description the same functions(s) or operations(s), unless the contrary intention appears.

Embodiments of the invention implement systems and methods to aggregate multiple RF channels (sub-bands) in multiple frequency bands to provide a multi-gigabits/s wireless link with improved spectral efficiency, power efficiency and cost efficiency for a broadband backhauling application. Sub-band aggregation is used to merge multiple adjacent RF channels to form a wider bandwidth aggregated sub-band (ASB) so that guard bands in an ASB are not required and spectral efficiency can be improved. For a given ASB, single carrier modulation is applied to modulate data symbols on the centre frequency (or carrier) of the ASB. Together with the sub-band aggregation which also reduces the number of ASBs for a given frequency band, there will be fewer modulated signal carriers to be combined to form a multicarrier RF signal and hence the PAPR of the RF signal to be amplified and transmitted in a frequency band can be reduced to achieve higher power efficiency.

The multiband aggregated sub-band wireless link is suitable to be used for providing point-to-point communications between two communicating terminals, for example, between the Internet backbone and a BS of a broadband access network, between two BSs within a broadband access network, or between a BS and a fixed access point (AP) within a broadband access network. Of course, other wireless applications which use point-to-point fixed wireless links are within the scope of the invention.

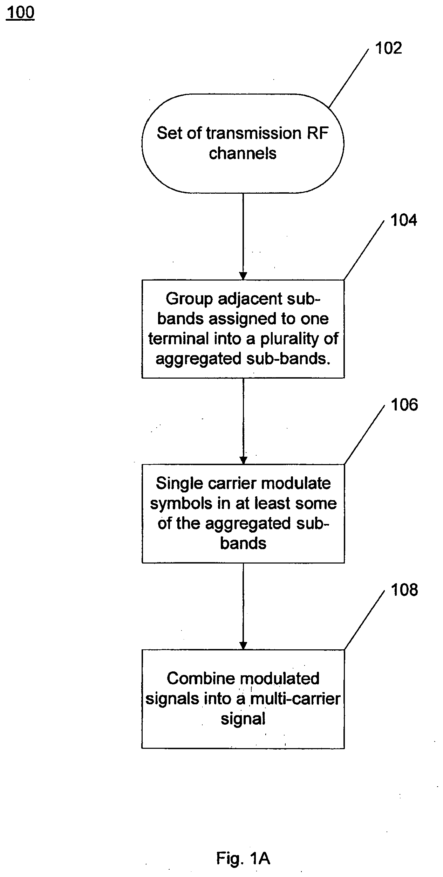

Fig. 1A is a block flow diagram of a method 100 embodying the invention. A set of transmission RF channels (also hereinafter called sub-bands) 102 exist. Adjacent sub-bands assigned to one user terminal are grouped into a plurality of aggregated sub-bands in step 104. Data symbols are single carrier modulated in at least some of the aggregated sub-band in step 106. The single carrier modulated signals are then combined into a multi-carrier signal in step 108. A step of up-conversion to a transmit frequency band also can be performed, either before or after the combining occurs.

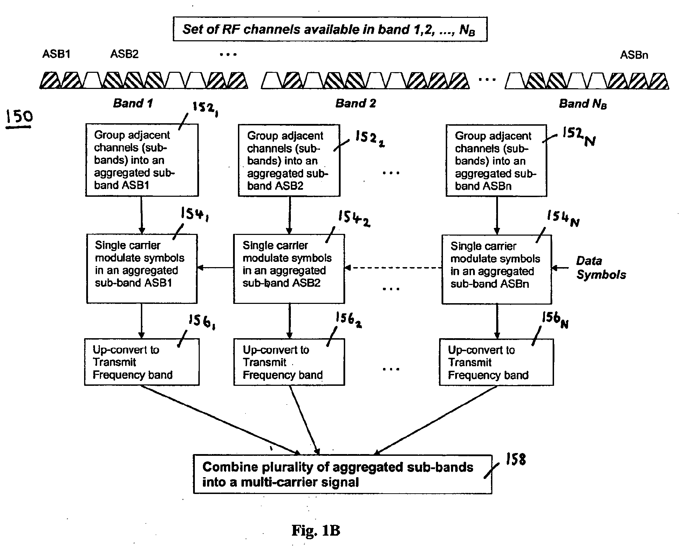

Fig. 1B is a block flow diagram of another method 150 embodying the invention. As shown diagrammatically, a set of RF channels (sub-bands) is available in Bands 1, 2 ..., N_{B}. Adjacent channels assigned to a particular terminal in all N_{B} bands are grouped in steps 152_{N} into aggregated sub-bands (ASB1, ASB2 ...ASB_{N}). In steps 154_{N}, data symbols are single carrier modulated in each ASB. Each single carrier modulated sub-band is then up-converted to a transmit frequency band in steps 156_{N}. Lastly, in step 158, the up-converted signals are combined into a multi-carrier signal for transmission.

In what follows, the expression "module" is to be understood as a general term for circuit elements, which can be implemented in many convenient forms, such as software running on a processor, firmware and FPGAs in the digital domain, and as discrete circuits in the analogue domain.

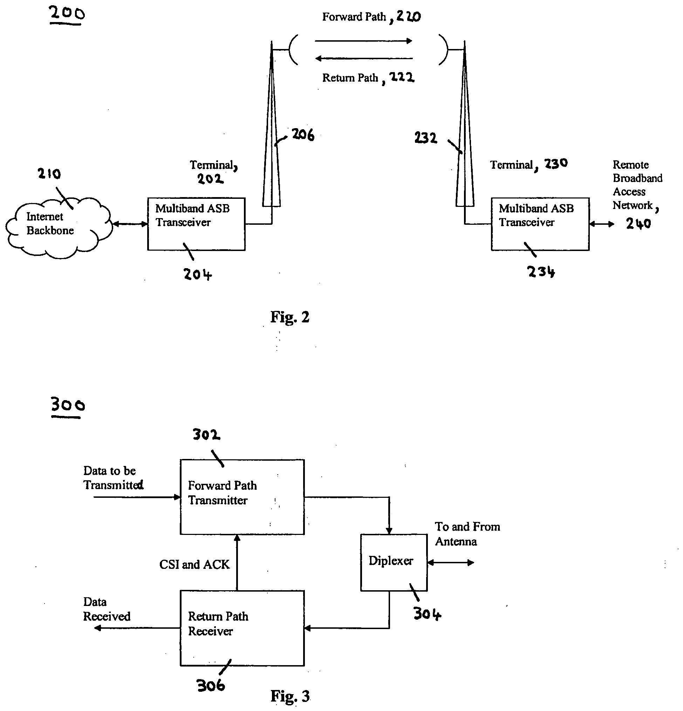

A system 200 implementing point-to-point wireless link is shown in Fig. 2, as an example. A first terminal 202 has a multiband ASB transceiver 204 and a radio frequency transmission and reception antenna 206. The transceiver 204 is connected to an internet backbone 210. The terminal 202 transmits to, on a forward path 220, and receives from, on a return path 222, an antenna 232 of a second terminal 230. The terminal 230 has a multiband ASB transceiver 234 connected to the antenna 232. The transceiver 234 is connected to a remote broadband access network 240.

Fig. 3 shows a schematic block diagram of a transceiver 300. The transceiver 300 thus embodies the two transceivers 204, 234 of Fig. 2, and the principal difference between the respective transceivers 204, 234 is that the operational frequencies for the respective transmitter and receiver are swapped. Data to be transmitted, in bit form, is provided to a forward path transmitter 302, which composes the data bits to form data packets and generates modulated signals that are provided to a diplexer 304, in turn, to be provided to an antenna (e.g. 206, 232) for transmission to a remote terminal. RF signals received by the antenna are passed to the diplexer 304, and then to a return path receiver 306. The return path receiver 306 thereby receives data packets as well as the forward path channel state information (CSI) and the acknowledgement (ACK) from the remote terminal. The transceiver 300 operates in a full duplex mode with a frequency-division duplexing (FDD) scheme, i.e. it transmits and receives at the same time but in different frequency spectra.

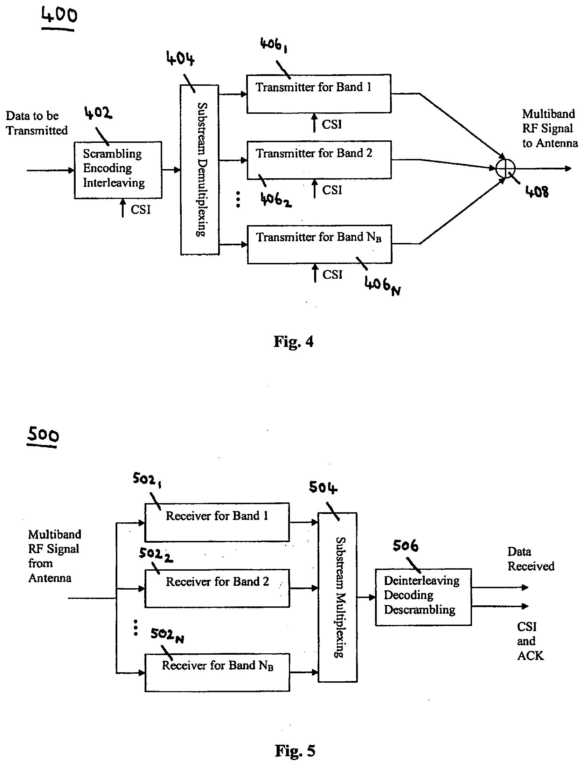

Fig. 4 shows a schematic block diagram of the forward path transmitter 400 (e.g. transmitter 302 in Fig. 3). There is a total of N_{B} frequency bands used in the multiband ASB transceiver 400. The forward path transmitter 400 has a scrambling, encoding and interleaving module 402, a sub-stream demultiplexing module 404 and N_{B} transmitters 406_{N}, each of which operates in a different frequency band. The input uncoded data bits are firstly scrambled, encoded using forward error codes (FEC), and interleaved by the processing module 402 to produce coded data bits. The coded data bits are then divided into N_{B} data substreams through substream demulplexing by the processing module 404. The coded data bits from each substream are mapped into data symbols and modulated on multiple frequency carriers or subcarriers to form RF signal in a corresponding frequency band by the transmitters 406_{N}. Multiple RF signals formed in multiple frequency bands are combined by a combiner circuit 408 and fed to the transmit antenna (e.g. 206, 232 via the diplexer 304). The CSI received from the return path 222 is used to control each processing module 402, 404, 406_{N} in the transmitter 400 to achieve adaptive modulation and coding (AMC) for optimised performance.

Fig. 5 shows a return path receiver 500 (e.g. the receiver 306 in Fig. 3). The return path receiver 500 has N_{B} receivers 502_{N}, each of which operates in a different frequency band, a substream multiplexing module 502, and a deinterleaving, decoding and descrambling module 506. The receiver 502_{N} operating in each frequency band receives the multiband RF signal and retrieves the coded data bits from data symbols modulated on multiple frequency carriers or subcarriers to recover each data substream. The substream multiplexing module 504 then combines N_{B} recovered substreams to form a single coded data stream. The coded data stream is finally deinterleaved, decoded and descrambled by the processing module 506 to recover the original uncoded data bits. ACK about the received packet will be generated after checking the packet error and CSI about the return path is determined according to predetermined training sequences or obtained blindly. The ACK and CSI regarding the forward path are embedded in the received packet and will be also retrieved.

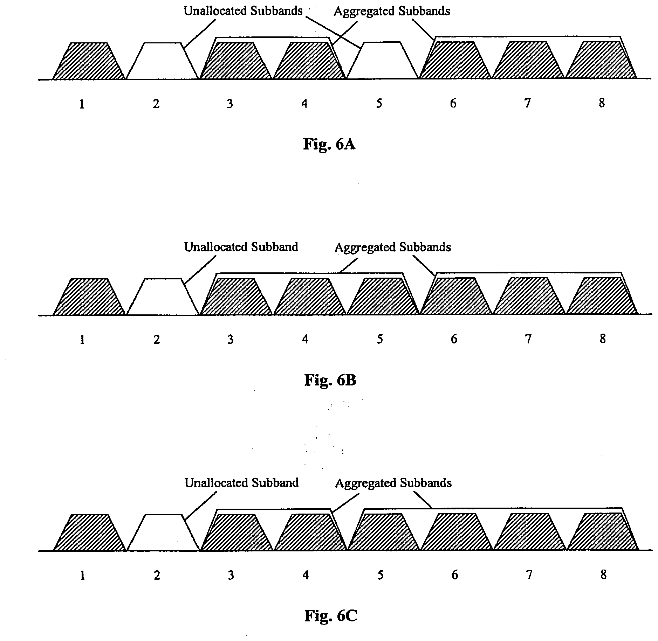

As mentioned previously, a frequency band is typically divided into a number of RF channels in pairs according to regulatory rules. One RF channel in the pair is used for forward path and the other is used for return path. At any given link, all RF channels assigned for the same forward or return path will be placed at either the lower or the higher block of the frequency band. For illustration purposes, Fig. 6A shows all eight RF channels numbered 1 to 8 for forward path used in a given frequency band, where only six channels numbered 1, 3, 4, 6, 7, and 8 are assigned to the wireless link/terminal and channels 2 and 5 are assigned to a different user terminal. To improve the spectral efficiency, sub-band aggregation is used by which all adjacent sub-bands are grouped to form a wider sub-band called aggregated sub-band (i.e., ASB). In the example shown in Fig. 6A, after sub-band aggregation, the number of sub-bands is reduced from originally six to three, where channel 3 and 4 as well as channel 6, 7, and 8 form two aggregated sub-bands respectively. A maximum allowed number of channels in an aggregated sub-band may be imposed to limit the bandwidth of an aggregated sub-band. There exist different ways to aggregate sub-bands. This is illustrated in Figs. 6B and 6C, where channel 1 and channels 3 to 8 are assigned to the link and the maximum number of channels in an aggregated sub-band is assumed to be four. Channels 3 to 8 can be aggregated to form two wider sub-bands, each having three channels, or, one having two channels and the other having the maximum four channels. If there is no limit on the maximum number of channels in an ASB, then channels 3 to 8 can be formed as one ASB.

To improve the power efficiency, single carrier modulation is used for each aggregated sub-band, i.e., the data symbols are modulated on the centre frequency (Intermediate Frequency or RF carrier) of each aggregated sub-band. All single carrier modulated signals in a frequency band are combined to form the final RF signal to be power amplified and transmitted. Due to the sub-band aggregation and single carrier modulation, there will be less single carrier modulated signals to be superimposed together so that the PAPR of the final RF signal will be reduced as compared to that of the independently modulated and combined RF signal. In addition, the sub-band aggregation also simplifies the baseband signal processing and reduces the number of RF chains including the mixers, filters and amplifiers so that the implementation cost will be reduced.

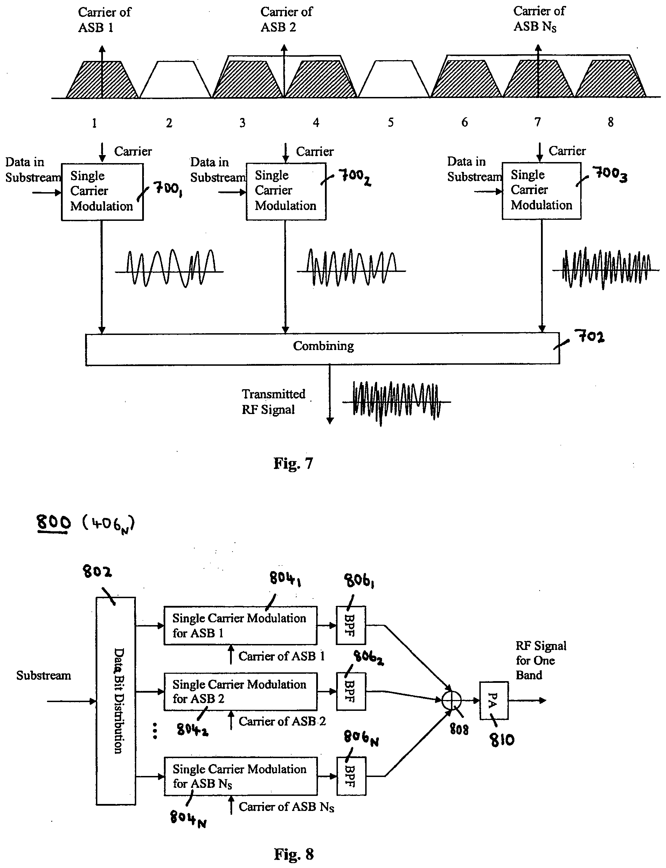

Fig. 7 shows generation of the RF signal by a transmitter for a given frequency band with single carrier modulation for each aggregated sub-band and combining all modulated carriers together. The aggregated sub-band arrangement shown in Fig. 6A is used for the purposes of illustration. The carrier (i.e. the centre frequency) of each ASB is indicated, for example, as "Carrier of ASB1". Each carrier and a data substream are input to a respective single carrier modulation module 700_{N}. The thus modulated signals are then combined into a multi-carrier signal in a combining module 702. The resultant RF signal waveforms for the single carrier modulated signals (i.e. output from the respective modulation module 700_{N}) and the combined RF signal (i.e. output from the combining module 702) are illustrated. This radio spectrum access method, by which the data symbols are directly modulated on the carrier of an ASB, is termed aggregated sub-band frequency-division multiple access (ASB-FDMA).

The block diagram of this transmitter embodiment 800, representing the next level of detail of each transmitter 406_{N} in Fig. 4, is shown in Fig. 8. The data bits from the substream (resulting from the substream demultiplexing 404) are first distributed by a distribution module 802 to each single carrier modulation module 804_{N}. Each single carrier modulation module 804 then modulates the data bits on to the carrier using digital modulation techniques such as multilevel phase shift keying (PSK) or quadrature amplitude modulation (QAM) to generate a RF signal to be transmitted in the corresponding ASB. A bandpass filter (BPF) 806_{N} restricts the signal bandwidth to satisfy a desired transmit mask requirement. There are total N_{S} ASBs in the frequency band. Finally, all modulated RF signals to be transmitted in all ASBs are combined by a combiner 808 and amplified by a power amplifier (PA) 810 to generate the RF signal for the frequency band (e.g. Band 1). Note that power amplification can also be performed for individual RF signal in each ASB before combining.

The direct combining of RF signals may be less desirable in some implementations of the ASB-FDMA transmitter 800. An alternative approach is to combine the modulated carriers at some intermediate frequencies (IF) for each ASB and up-convert the combined IF signal to the correct RF frequency band.

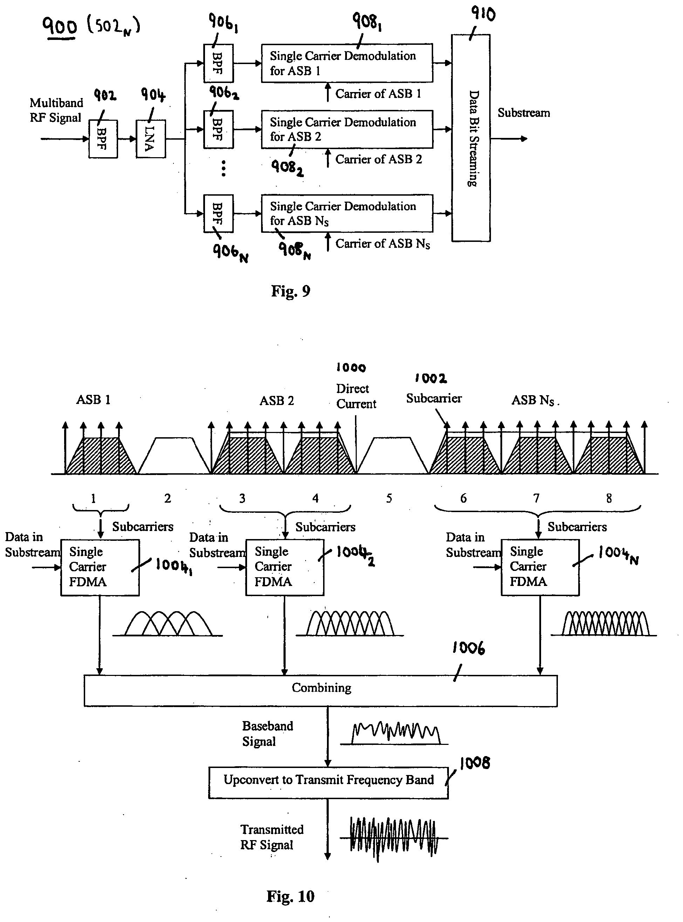

A corresponding receiver 900 to receive the signal generated by the transmitter 800 using the ASB-FDMA approach is shown in Fig. 9. The receiver 900 provides the next level of detail for each receiver 502_{N} shown in Fig. 5. The received multiband RF signal is first passed through a BPF 902 to obtain the RF signal in the specified frequency band and then amplified by a low noise amplifier (LNA) 904. The amplified signal is further filtered by a BPF 906_{N} then fed to each single carrier demodulation module 908_{N} to perform signal demodulation and equalisation in the corresponding ASB. After demodulation and equalisation, the received data bits from each ASB are obtained. Finally, all the received data bits are combined in a streaming module 910 to form the received data sub-stream.

The receiver may first down-convert the received RF signal to an IF band and then demodulate the data symbols at respective IF carriers of the ASB.

The single carrier modulation and demodulation may use digital baseband processing and thus may include both digital domain and analogue domain modules.

As a second embodiment of the transmitter, the RF signal to be transmitted in a frequency band can be generated using a frequency-domain multicarrier modulation approach. This approach is illustrated in Fig. 10, where the same aggregated sub-band arrangement shown in Fig. 6A is used as an example. In this embodiment, digital signal processing techniques are used to generate a baseband signal first. The baseband is centered about the zero frequency (i.e., direct current, 1000) in the illustration. Other implementations are also possible (e.g., the second Nyquist zone). The desired (or chosen) frequency band is firstly divided into a number of subcarriers 1002. The subcarriers 1002, which will be up-converted into an aggregated sub-band, form a cluster of consecutive subcarriers. Data symbols to be transmitted are then allocated to the cluster of subcarriers and modulated using the single carrier frequency-division multiple access (SC-FDMA) technique (i.e. module 1004) to generate a single carrier baseband signal. All such single carrier baseband signals generated by different clusters of subcarriers are combined by the module 1006 to form the baseband signal for the frequency band. Finally, the baseband signal is up-converted by module 1008 to the respective RF carrier. In Fig. 10, the baseband signal envelopes and the transmitted RF signal waveform are also illustrated.

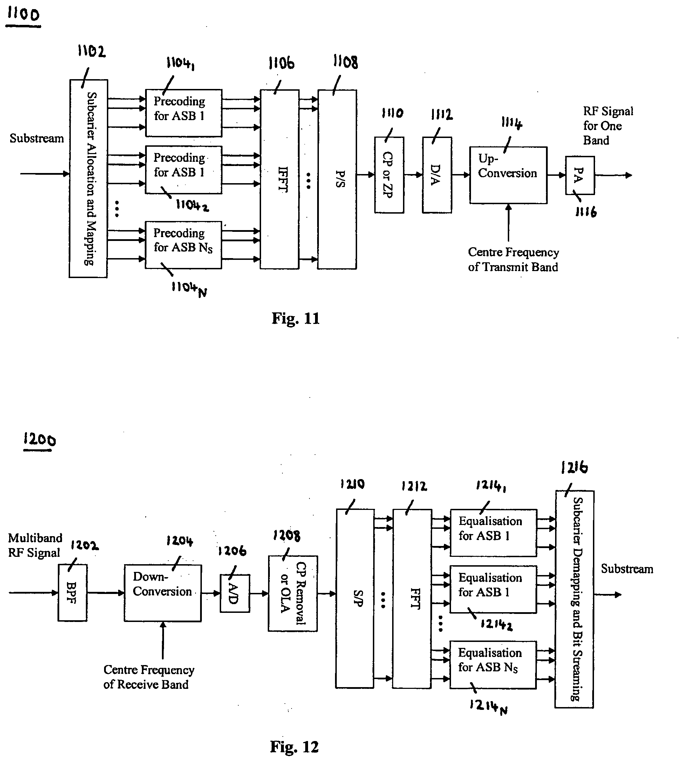

A schematic block diagram of a transmitter 1100 which implements the frequency-domain multicarrier approach of Fig. 10 is shown in Fig. 11, and represents another form of the transmitter 406 of Fig. 4. Data bits from the sub-stream are firstly allocated by a module 1102 to different clusters of subcarriers and mapped into data symbols using symbol constellation mapping techniques such as QAM. A set of data symbols corresponding to a cluster of subcarriers are then pre-coded by respective modules 1104_{N} using a discrete Fourier transform (DFT) matrix to form a new set of pre-coded data symbols. After performing such pre-coding for all clusters of subcarriers, an inverse fast Fourier transform (IFFT) of size equal to the total number of subcarriers (including the null subcarriers in unallocated RF channels) is performed by a module 1106 to produce the time-domain baseband signal. The IFFT module 1106 automatically realises the combination of the multiple SC-FDMA signals, so the combining process 1006 shown in Fig. 10 is inherent in the transmitter 1100. After parallel-to-serial conversion (P/S) in module 1108 and cyclic prefix (CP) insertion or zero-padded (ZP) suffix appending in a module 1110, an orthogonal frequency-division multiplexing (OFDM) type symbol is generated. This signal generation process is termed ASB-OFDM. The ASB-OFDM symbol is converted into an analogue signal by a dual digital-to-analogue converter (D/A) 1112, up-converted to the RF frequency band by module 1114, and finally amplified by a power amplifier 1116 to generate the RF signal for the frequency band.

The corresponding receiver 1200 to receive the signal generated by the transmitter 1100 using ASB-OFDM is shown in Fig. 12, as another form of the receiver 502 shown in Fig. 5. Similarly to the receiver 900 using ASB-FDMA, the received multiband RF signal is first passed through a BPF 1202 to obtain the RF signal in the specified frequency band and then amplified by an LNA (not shown). However, the amplified signal is then shifted into baseband by a down conversion module 1204 and converted into digital domain by a dual analogue-to-digital converter (A/D) 1206 to obtain the received ASB-OFDM symbol. Before further processing, the CP of the received ASB-OFDM symbol will be removed (if CP is inserted in ASB-OFDM symbol at the transmitter) or an overlap-add (OLA) operation will be performed to the received ASB-OFDM symbol (if ZP is appended in ASB-OFDM symbol at the transmitter) by a processing module 1208. The resulting ASB-OFDM symbol is then converted into the frequency-domain after serial-to-parallel conversion (S/P) by a processing module 1210 and fast Fourier transform (FFT) by a transform module 1212. In the frequency-domain, the subcarriers are grouped into clusters according to the aggregated sub-band arrangement in the frequency band. Each cluster of subcarriers is then equalized by a respective processing module 1214_{N} to compensate for the propagation channel effects and decoded using an inverse DFT (IDFT) matrix to recover the data symbols transmitted in the corresponding aggregated sub-band. All the recovered data symbols are finally demapped by a processing module 1216 into data bits and combined to form the received data sub-stream.

The up-conversion and down-conversion modules may use an appropriate IF stage to accommodate different implementation cost and complexity requirements.

The above different embodiments for the transmitter and receiver apply to all the frequency bands considered in the multiband ASB transceiver 202, 234. However, the RF channel bandwidth and assignment as well as the aggregated sub-band arrangement, can be different for different frequency bands. The system parameters such as the total number of aggregated sub-bands, the total number of subcarriers, and the subcarrier frequency spacing can be also different for different frequency bands.

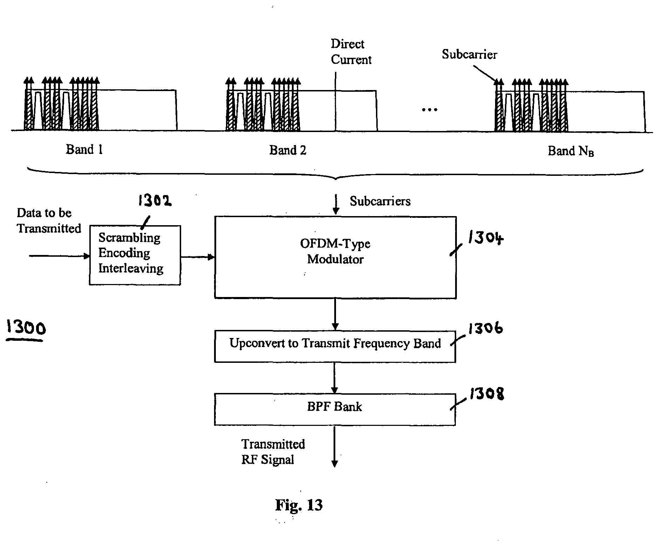

A third embodiment to realise a multiband multi-channel transmitter 1300 is illustrated in Fig. 13, where the transmitter bandwidth covers all the N_{B} frequency bands to provide full capability and flexibility in aggregating radio spectral resources and offering high data transmission rates. In this embodiment, the baseband is centered about the DC but the bandwidth is wide enough to accommodate the entire transmitted signal bandwidth over multiple frequency bands. The baseband is first divided into a number of subcarriers. The subcarrier spacing is fine enough to distinguish sub-bands (i.e. at least one subcarrier per sub-band). The sub-carriers fall in unallocated sub-bands and/or bands are nulled. Data to be transmitted are scrambled, encoded, interleaved by a module 1302, and then fed to an OFDM-type modulator 1304 to generate a modulated digital baseband signal. Only the subcarriers in the allocated sub-bands are modulated by the data symbols. The digital baseband signal is further upconverted by a module 1306 to the transmit frequency band. To reduce interference in unallocated frequency bands and/or sub-bands, a bandpass filter bank 1308 is used after frequency upconversion. The filtered RF signal is finally power amplified and transmitted by a wide bandwidth antenna.

The OFDM-type modulator 1304 has a structure similar to that shown in Fig. 11 but with more subcarriers to cover a wider bandwidth. Encoded data are mapped on to the valid subcarriers in the allocated sub-bands. Techniques for PAPR reduction, such as the frequency domain pre-coding mentioned in the second embodiment, may be also applied. Modulated subcarriers including all nulled subcarriers are transformed to time domain signal samples via IFFT. After P/S, CP insertion or ZP appending, and D/A, the analogue baseband signal is formed.

The frequency upconversion may use direct conversion with the In-phase/Quadrature (I/Q) architecture for shifting the complex baseband signal to RF signal. Alternatively, a real digital IF signal may be generated by the OFDM-type modulator 1304 and then upconverted to the transmit frequency band using a single mixer.

The corresponding multiband multi-channel receiver (not shown) operates in a reverse direction to that described in Fig. 13. The received RF signal is first filtered by a bandpass filter bank to obtain the signal in allocated sub-bands in all frequency bands, and then downcconverted to baseband. The baseband signal is processed by an OFDM-type demodulator to recover the coded data bits. The coded data bits are then deinterleaved, decoded and descrambled to recover the original uncoded data bits.

The OFDM-type demodulator will have a similar structure to that shown in Fig. 12. After A/D, CP removal or OLA, and S/P, FFT is performed to the received digital baseband samples to transform the baseband signal to frequency domain. Equalisation is then performed for subcarriers in all sub-bands, and finally the uncoded data bits are recovered.

The frequency downconversion may also use direct conversion with I/Q architecture to shift the RF signal to complex baseband signal, or, use a single mixer to shift the RF signal to an IF signal which is then digitised for processing by the OFDM-type demodulator.

In all of the above embodiments of a high data rate wireless transceiver, the sub-band aggregation is dynamically performed, i.e., given the information about the frequency band and sub-band assignment, the transceiver can automatically adjust the system parameters and/or reconfigure the hardware to achieve better performance. For example, when the transmitter buffer is full or nearly full, the incoming data needs to be transmitted at the highest data rate. In this case, all available sub-bands are aggregated and used for data transmission. When the transmitter buffer is nearly empty, there are less data to be transmitted and the data rate is low. In this case, fewer sub-bands can be aggregated and used for data transmission; the minimum number being two. In general, the number of aggregated sub-bands, the number of sub-bands in an aggregated sub-band, and the number of frequency bands can be dynamically selected according to the data rate requirement. It may be the case that data will not be modulated into symbols in all aggregated sub-bands at any given instant, again depending upon data rate requirements. Other system parameters such as the coding rate and modulation type can be also determined or adjusted according to different sub-band aggregation schemes. The invention is defined by the appended claims.

## Claims

1. A wireless data communications method comprising:
aggregating adjacent radio frequency channels assigned to a single terminal into a plurality of aggregated radio frequency channels, each aggregated radio frequency channel comprising at least two adjacent radio frequency channels;
single carrier modulating data symbols of a respective data stream into each of said plurality of said aggregated radio frequency channels, said single carrier being on a centre frequency of the aggregated radio frequency channel; and
combining said modulated data symbols into a multi-carrier signal.

2. A method according to claim 1 further comprising the step of:
frequency upconverting said single carrier modulated data symbols before the combining step.

3. A method according to claim 1 or claim 2, wherein said single carrier modulation is a form of multilevel phase shift keying or quadrature amplitude modulation, or of frequency division multiple access modulation.

4. A method according to any one of the preceding claims, wherein said plurality of aggregated radio frequency channels is varied in number in a range extending between one of and all of said assigned channels as data rate increases.

5. A method according to any one of the preceding claims, wherein data symbols are modulated in all of said plurality of aggregated radio frequency channels.

6. A transmitter comprising:
a module configured to aggregate adjacent radio frequency channels assigned to a single terminal into a plurality of aggregated radio frequency channels, each aggregated radio frequency channel comprising at least two adjacent radio frequency channels;
a single carrier modulator configured to modulate data symbols of a respective data stream into each of said plurality of said aggregated radio frequency channels, said single carrier being on a centre frequency of the aggregated radio frequency channel; and
a module configured to combine said single carrier modulated data symbols into a multi-carrier signal.

7. A transmitter according to claim 6, further comprising a frequency conversion module configured to up-convert said single carrier modulated signals or said multi-carrier signal.

8. A transmitter according to claim 6 or claim 7, wherein said modulator is configured to perform a form of multilevel phase shift keying or quadrature amplitude modulation, or frequency division multiple access modulation.

9. A transmitter according to any one of claim 6 to claim 10, wherein said aggregating module varies in number said plurality of aggregated radio frequency channels in a range extending between one of and all of said assigned channels as data rate increases.

10. A transmitter according to any one of claim 6 to claim 9, wherein said modulator modulates data symbols in all of said plurality of aggregated radio frequency channels.

11. A transceiver comprising:
a transmitter including:
a module configured to aggregate adjacent radio frequency channels assigned to a single terminal into a plurality of aggregated radio frequency channels, each aggregated radio frequency channel comprising at least two adjacent radio frequency channels;
a single carrier modulator configured to modulate data symbols of a respective data stream into each of said plurality of said aggregated radio frequency channels, said single carrier being on a centre frequency of the aggregated radio frequency channel; and
a module configured to combine said single carrier modulated data symbols into a multi-carrier signal; and
a receiver including:
a module configured to separate a received multi-carrier signal into a plurality of single carrier modulated signals; and
a module configured to demodulate each said single carrier modulated signal into data symbols.

12. A transceiver according to claim 11, further comprising a frequency conversion module configured to up-convert said single carrier modulated signals or said multi-carrier signal.

13. A transceiver according to claim 11 or claim 12, wherein said modulator is configured to perform a form of multilevel phase shift keying or quadrature amplitude modulation, or frequency division multiple access modulation.

14. A transceiver according to any one of claim 11 to claim 13, wherein said aggregating module varies in number said plurality of aggregated radio frequency channels in a range extending between one of and all of said assigned channels as data rate increases.

15. A transceiver according to any one of claim 13 to claim 14, wherein said modulator modulates data symbols in all of said plurality of aggregated radio frequency channels.

16. A method according to claim 3, wherein said frequency division multiple access modulation comprises:
dividing said aggregated radio frequency channels into a plurality of subcarriers;
allocating said data symbols to said plurality of subcarriers, and
modulating said data symbols to said allocated subcarriers using single carrier frequency division multiple access modulation.

17. A transmitter according to claim 8, wherein said modulator is configured to:
divide said aggregated radio frequency channels into a plurality of subcarriers;
allocate said data symbols to said plurality of subcarriers, and
modulate said data symbols to said allocated subcarriers using single carrier frequency division multiple access modulation.

18. A transceiver according to claim 13, wherein said modulator is configured to:
divide said aggregated radio frequency channels into a plurality of subcarriers;
allocate said data symbols to said plurality of subcarriers, and
modulate said data symbols to said allocated subcarriers using single carrier frequency division multiple access modulation.

## Patentansprüche

1. Verfahren zur drahtlosen Datenkommunikation, umfassend:
Aggregieren von benachbarten Radiofrequenzkanälen, die einem einzelnen Terminal zugewiesen sind, zu einer Vielzahl von aggregierten Radiofrequenzkanälen, wobei jeder aggregierte Radiofrequenzkanal zumindest zwei benachbarte Radiofrequenzkanäle umfasst;
Einzelträgermodulieren von Datensymbolen eines entsprechenden Datenstroms in jeden der Vielzahl von aggregierten Radiofrequenzkanälen, wobei der Einzelträger auf einer Mittenfrequenz des aggregierten Radiofrequenzkanals liegt; und
Kombinieren der modulierten Datensymbole zu einem Mehrträgersignal.

2. Verfahren nach Anspruch 1, des Weiteren umfassend folgenden Schritt:
Aufwärts-Frequenzumsetzen der einzelträgermodulierten Datensymbole vor dem Schritt des Kombinierens.

3. Verfahren nach Anspruch 1 oder Anspruch 2, bei dem die Einzelträgermodulation eine Form von mehrstufiger Phasenumtastungs- oder Quadratur-Amplituden-Modulation oder von FDMA- (*Frequency Division Multiple Access,* Mehrfachzugriff im Frequenzmultiplex) Modulation ist.

4. Verfahren nach einem der vorhergehenden Ansprüche, bei dem die Vielzahl von aggregierten Radiofrequenzkanälen mit zunehmender Datenrate hinsichtlich ihrer Anzahl in einem Bereich zwischen einem und allen der zugewiesenen Kanäle variiert wird.

5. Verfahren nach einem der vorhergehenden Ansprüche, bei dem die Datensymbole in allen der Vielzahl von aggregierten Radiofrequenzkanälen moduliert werden.

6. Sender, umfassend:
Ein Modul, das derart konfiguriert ist, dass es benachbarte Radiofrequenzkanäle, die einem einzigen Terminal zugewiesen sind, zu einer Vielzahl von aggregierten Radiofrequenzkanälen aggregiert, wobei jeder aggregierte Radiofrequenzkanal zumindest zwei benachbarte Radiofrequenzkanäle umfasst;
einen Einzelträgermodulator, der derart konfiguriert ist, dass er Datensymbole eines entsprechenden Datenstroms in jeden der Vielzahl von aggregierten Radiofrequenzkanälen moduliert, wobei der Einzelträger auf einer Mittenfrequenz des aggregierten Radiofrequenzkanals liegt; und
ein Modul, das derart konfiguriert ist, dass es die einzelträgermodulierten Datensymbole zu einem Mehrträgersignal kombiniert.

7. Sender nach Anspruch 6, des Weiteren umfassend ein Frequenzumwandlungsmodul, das derart konfiguriert ist, dass es die einzelträgermodulierten Signale oder das Mehrträgersignal aufwärtskonvertiert.

8. Sender nach Anspruch 6 oder Anspruch 7, bei dem der Modulator derart konfiguriert ist, dass er eine Form von mehrstufiger Phasenumtastungs- oder Quadratur-Amplituden-Modulation oder von FDMA-Modulation durchführt.

9. Sender nach einem der Ansprüche 6 bis 10 [8?], bei dem das Aggregationsmodul mit zunehmender Datenrate die Vielzahl von aggregierten Radiofrequenzkanälen hinsichtlich ihrer Anzahl in einem Bereich zwischen einem und allen der zugewiesenen Kanäle variiert.

10. Sender nach einem der Ansprüche 6 bis 9, bei dem der Modulator Datensymbole in allen der Vielzahl von aggregierten Radiofrequenzkanälen moduliert.

11. Transceiver, umfassend:
Einen Sender, der folgendes aufweist:
Ein Modul, das derart konfiguriert ist, dass es benachbarte Radiofrequenzkanäle, die einem einzigen Terminal zugewiesen sind, zu einer Vielzahl von aggregierten Radiofrequenzkanälen aggregiert, wobei jeder aggregierte Radiofrequenzkanal zumindest zwei benachbarte Radiofrequenzkanäle umfasst;
einen Einzelträgermodulator, der derart konfiguriert ist, dass er Datensymbole eines entsprechenden Datenstroms in jeden der Vielzahl von aggregierten Radiofrequenzkanälen moduliert, wobei der Einzelträger auf einer Mittenfrequenz des aggregierten Radiofrequenzkanals liegt; und
einen Empfänger, der folgendes aufweist:
ein Modul, das derart konfiguriert ist, dass es ein empfangenes Mehrträgersignal in eine Vielzahl von einzelträgermodulierten Signale aufteilt; und
ein Modul, das derart konfiguriert ist, das es jedes einzelträgermodulierte Signal zu Datensymbolen demoduliert.

12. Transceiver nach Anspruch 11, des Weiteren umfassend ein Frequenzumwandlungsmodul, das derart konfiguriert ist, dass es die einzelträgermodulierten Signale oder das Mehrträgersignal aufwärtskonvertiert.

13. Transceiver nach Anspruch 11 oder Anspruch 12, bei dem der Modulator derart konfiguriert ist, dass er eine Form von mehrstufiger Phasenumtastungs- oder Quadratur-Amplituden-Modulation oder von FDMA-Modulation durchführt.

14. Transceiver nach einem der Ansprüche 11 bis 13, bei dem das Aggregationsmodul mit zunehmender Datenrate die Vielzahl von aggregierten Radiofrequenzkanälen hinsichtlich ihrer Anzahl in einem Bereich zwischen einem und allen der zugewiesenen Kanäle variiert.

15. Transceiver nach einem der Ansprüche 13 bis 14, bei dem der Modulator Datensymbole in alle der Vielzahl von aggregierten Radiofrequenzkanälen moduliert.

16. Verfahren nach Anspruch 3, bei dem die FDMA-Modulation folgendes umfasst:
Aufteilen der aggregierten Radiofrequenzkanäle in eine Vielzahl von Unterträgern;
Zuordnen der Datensymbole zu der Vielzahl von Unterträgern, und
Modulieren der Datensymbole auf die zugeordneten Unterträger mittels Einzelträger-FDMA-Modulation.

17. Sender nach Anspruch 8, bei dem der Modulator derart konfiguriert ist, dass er:
Die aggregierten Datenfrequenzkanäle in eine Vielzahl von Unterträgern aufteilt;
die Datensymbole der Vielzahl von Unterträgern zuordnet, und
die Datensymbole mittels Einzelträger-FDMA-Modulation auf die zugeordneten Unterträger moduliert.

18. Transceiver nach Anspruch 13, bei dem der Modulator derart konfiguriert ist, dass er:
Die aggregierten Radiofrequenzkanäle in eine Vielzahl von Unterträgern aufteilt;
die Datensymbole der Vielzahl von Unterträgern zuordnet, und
die Datensymbole mittels FDMA-Modulation auf die zugeordneten Unterträger moduliert.

## Revendications

1. Procédé de communications de données sans fil comprenant :
l'agrégation de canaux de fréquence radio adjacents attribués à un terminal unique en une pluralité de canaux de fréquence radio agrégés, chaque canal de fréquence radio agrégé comprenant au moins deux canaux de fréquence radio adjacents ;
la modulation à porteuse unique des symboles de données d'un flux de données respectif dans chacun de ladite pluralité desdits canaux de fréquence radio agrégés, ladite porteuse unique se trouvant sur une fréquence centrale du canal de fréquence radio agrégé ; et
la combinaison desdits symboles de données modulés en un signal à porteuses multiples.

2. Procédé selon la revendication 1, comprenant en outre l'étape consistant à :
convertir en élévation lesdits symboles de données à porteuse unique avant l'étape de combinaison.

3. Procédé selon la revendication 1 ou la revendication 2, dans lequel ladite modulation à porteuse unique est une forme de modulation par déplacement de phase à plusieurs niveaux ou de modulation d'amplitude en quadrature de phase, ou de modulation d'accès multiples par répartition en fréquence.

4. Procédé selon l'une quelconque des revendications précédentes, dans lequel ladite pluralité de canaux de fréquence radio agrégés varie en nombre dans une plage qui s'étend entre l'un parmi les, et l'intégralité des dits canaux attribués au fur et à mesure que le débit de données augmente.

5. Procédé selon l'une quelconque des revendications précédentes, dans lequel les symboles de données sont modulés dans l'intégralité de ladite pluralité des canaux de fréquence radio agrégés.

6. Emetteur comprenant :
un module configuré pour agréger des canaux de fréquence radio adjacents attribués à un terminal unique en une pluralité de canaux de fréquence radio agrégés, chaque canal de fréquence radio agrégé comprenant au moins deux canaux de fréquence radio adjacents ;
un modulateur à porteuse unique configuré pour moduler des symboles de données d'un flux de données respectif en chacun de ladite pluralité desdits canaux de fréquence radio agrégés, ladite porteuse unique se trouvant sur une fréquence centrale du canal de fréquence radio agrégé ; et
un module configuré pour combiner lesdits symboles de données modulés à porteuse unique en un signal à porteuses multiples.

7. Emetteur selon la revendication 6, comprenant en outre un module de conversion de fréquence configuré pour convertir en élévation lesdits signaux modulés à porteuse unique ou ledit signal à porteuses multiples.

8. Emetteur selon la revendication 6 ou la revendication 7, dans lequel ledit modulateur est configuré pour effectuer une forme de modulation par déplacement de phase à plusieurs niveaux ou de modulation d'amplitude en quadrature de phase, ou de modulation d'accès multiples par répartition en fréquence.

9. Emetteur selon l'une quelconque de la revendication 6 à la revendication 10, dans lequel ledit module d'agrégation fait varier le nombre de ladite pluralité de canaux de fréquence radio agrégés dans une plage qui s'étend entre l'un parmi les, et l'intégralité des dits canaux attribués au fur et à mesure que le débit de données augmente.

10. Emetteur selon l'une quelconque de la revendication 6 à la revendication 9, dans lequel ledit modulateur module les symboles de données dans l'intégralité de ladite pluralité de canaux de fréquence radio agrégés.

11. Emetteur-récepteur, comprenant :
un émetteur comportant :
un module configuré pour agréger des canaux de fréquence radio adjacents attribués à un terminal unique en une pluralité de canaux de fréquence radio agrégés, chaque canal de fréquence radio agrégé comprenant au moins deux canaux de fréquence radio adjacents ;
un modulateur à porteuse unique configuré pour moduler des symboles de données d'un flux de données respectif en chacun de ladite pluralité desdits canaux de fréquence radio agrégés, ladite porteuse unique se trouvant sur une fréquence centrale du canal de fréquence radio agrégé ; et
un module configuré pour combiner lesdits symboles de données modulés à porteuse unique en un signal à porteuses multiples ; et
un récepteur comportant :
un module configuré pour séparer un signal à porteuses multiples reçu en une pluralité de signaux modulés à porteuse unique ; et
un module configuré pour démoduler chaque signal modulé à porteuse unique en des symboles de données.

12. Emetteur-récepteur selon la revendication 11, comprenant en outre un module de conversion de fréquence configuré pour convertir en élévation lesdits signaux modulés à porteuse unique ou ledit signal à porteuses multiples.

13. Emetteur-récepteur selon la revendication 11 ou la revendication 12, dans lequel ledit modulateur est configuré pour effectuer une forme de modulation par déplacement de phase à plusieurs niveaux ou de modulation d'amplitude en quadrature de phase, ou de modulation d'accès multiples par répartition en fréquence.

14. Emetteur-récepteur selon l'une quelconque de la revendication 11 ou revendication 13, dans lequel ledit module d'agrégation fait varier le nombre ladite pluralité de canaux de fréquence radio agrégés dans une plage qui s'étend entre l'un parmi les, et l'intégralité des dits canaux attribués au fur et à mesure que le débit de données augmente.

15. Emetteur-récepteur selon l'une quelconque de la revendication 13 ou revendication 14, dans lequel ledit modulateur module les symboles de données dans l'intégralité de ladite pluralité de canaux de fréquence radio agrégés.

16. Procédé selon la revendication 3, dans lequel ladite modulation d'accès multiples par répartition en fréquence comprend :
la division desdits canaux de fréquence radio agrégés en une pluralité de sous-porteuses ;
l'attribution desdits symboles de données à ladite pluralité de sous-porteuses, et
la modulation desdits symboles de données par rapport aux dites sous-porteuses attribuées en utilisant la modulation d'accès multiples par répartition en fréquence à porteuse unique.

17. Emetteur selon la revendication 8, dans lequel ledit modulateur est configuré pour :
diviser lesdits canaux de fréquence radio agrégés en une pluralité de sous-porteuses ;
attribuer lesdits symboles de données à ladite pluralité de sous-porteuses, et
moduler lesdits symboles de données par rapport auxdites sous-porteuses attribuées en utilisant la modulation d'accès multiples par répartition en fréquence à porteuse unique.

18. Emetteur-récepteur selon la revendication 13, dans lequel ledit modulateur est configuré pour :
diviser lesdits canaux de fréquence radio agrégés en une pluralité de sous-porteuses ;
attribuer lesdits symboles de données à ladite pluralité de sous-porteuses, et
moduler lesdits symboles de données par rapport auxdites sous-porteuses attribuées en utilisant une modulation d'accès multiples par répartition en fréquence à porteuse unique.
